# FASCICULE DE BREVET EUROPEEN

(11) **EP 1 060 976 B1**
(45) Date de publication et mention de la délivrance du brevet: **10.12.2003**
(21) Numéro de dépôt: 00401719.0
(22) Date de dépôt: 16.06.2000
(51) Int. Cl.: B62D 35/00

(54) **Bouclier à bavette inférieure mobile**
Stossfänger mit bewegbarem Untersatz
Apron with movable lower spoiler

(30) Priorité: 16.06.1999 FR 9907619
(43) Date de publication de la demande: 20.12.2000
(73) Titulaire: COMPAGNIE PLASTIC OMNIUM, 69007 Lyon (FR); Renault s.a.s., 92100 Boulogne Billancourt (FR)
(72) Inventeur: Jacquemard, Claude, 01100 Oyonnax (FR); Guiochet, Claire, 41190 Chambon sur Cisse (FR); Liadouze, Alain, 78503 Buc (FR); Bourdassol, Claude, 78210 Saint-Cyr (FR)
(74) Mandataire: Tanty, François

(56) Documents cités:
- FR-A- 2 540 813
- US-A- 4 659 130

## Description

La présente invention concerne un bouclier de véhicule automobile à bavette inférieure mobile.

On sait que les boucliers de véhicules automobiles servent d'une part à habiller le pare-chocs, d'autre part à empêcher la circulation d'un flux d'air trop important sous le véhicule, afin d'améliorer sa tenue de route.

A l'avant, on cherche à limiter la pénétration d'air pour limiter la portance du véhicule.

A l'arrière, on cherche à réduire la traînée et la portance du véhicule.

Sur les véhicules les plus courants, le bouclier s'étend sur une hauteur moyenne qui correspond à un compromis entre une garde au sol suffisante et une certaine limitation du flux d'air.

Sur les véhicules dits sportifs, on utilise des boucliers qui se prolongent plus bas, ou bien l'on ajoute des bavettes, également désignées sous le terme "spoiler", ce qui réduit la garde au sol mais améliore sensiblement la tenue de route du véhicule.

L'inconvénient de tels dispositifs est qu'une garde au sol réduite n'est pas toujours compatible avec les conditions d'utilisation du véhicule, notamment si ce dernier circule en ville. En particulier, un problème se pose lorsque le véhicule emprunte une rampe d'accès d'un parc de stationnement à étages ou en sous-sols, au moment de la transition entre le plan horizontal de la zone de stationnement ou de circulation et le plan inclinée de la rampe. Ce problème est d'ailleurs plus fréquent à l'arrière des véhicules où le porte-à-faux est souvent plus important qu'à l'avant.

Le problème de la garde au sol apparaît également si le véhicule circule sur des chemins non carrossables à la campagne.

On a décrit dans la demande de brevet français FR-A-2 540 813 un déflecteur comprenant un écran pivotant, pourvu d'un bec sur son bord d'attaque, l'air incident venant appuyer sur ce bec pour provoquer la rotation de l'écran. Cette demande correspond au préambule de la revendication 1.

On a décrit dans le brevet US 4 659 130 un déflecteur pivotant se présentant sous la forme d'un caisson présentant également un bec sur son bord d'attaque.

Dans ces deux documents antérieurs, le déflecteur est relativement inesthétique du fait de la présence du bec.

Il existe un besoin pour disposer d'un bouclier pourvu d'une bavette mobile dont l'esthétique soit améliorée.

L'invention y parvient grâce aux caractéristiques énoncées dans la revendication 1.

La présence de la chambre de pression au-dessus de la bavette dans le bouclier selon l'invention permet d'éviter d'avoir à réaliser une bavette présentant un bec sur son bord d'attaque, le basculement de la bavette étant dû pour une part non négligeable à la pression de l'air sur la bavette ailleurs qu'au niveau de son bord d'attaque.

Le bord d'attaque peut ainsi être réalisé sans bec, contrairement aux déflecteurs antérieurs précités.

Le bouclier selon l'invention peut prendre deux configurations, à savoir une configuration dite faible vitesse dans laquelle sa bavette mobile est placée en position haute, de préférence au moins partiellement escamotée derrière le bouclier, de sorte que le bord inférieur du bouclier se situe à la même hauteur ou même plus haut que les boucliers des véhicules traditionnels et une configuration dite vitesse élevée dans laquelle la bavette s'étend vers le bas en prolongeant le bouclier de manière à accroître sa surface utile et limiter la circulation d'air sous le véhicule.

Ainsi, on peut réduire la portance du véhicule à grande vitesse, ce qui améliore ses performances aérodynamiques tant en ce qui concerne sa traînée, ce qui se traduit par une réduction de la consommation du moteur, qu'en ce qui concerne sa portance, ce qui entraîne une amélioration du comportement routier du véhicule.

En revanche, à faible vitesse, la garde au sol élevée du bouclier permet de franchir des obstacles courants tels que des ralentisseurs, des bordures de trottoir et autres obstacles fréquents en circulation urbaine ou de rouler sur des chemins non carrossables à la campagne.

Grâce au bouclier selon l'invention, on peut d'ailleurs prévoir qu'en position haute, le bouclier se trouve à une hauteur encore supérieure à celle des boucliers traditionnels étant donné que la fonction d'écran à l'air n'a aucune utilité tant que le véhicule circule lentement.

Avantageusement, le bouclier comporte au moins une prise d'air débouchant sur la chambre de pression.

De préférence, la bavette est agencée de manière à permettre la création d'une dépression sous celle-ci lorsque le véhicule roule, en plus de la surpression créée de son côté supérieur grâce à la chambre de pression.

La bavette peut notamment avoir un profil d'aile d'avion inversée.

Ainsi, le basculement de la bavette est facilité.

De préférence, la bavette présente un bord d'attaque conformé pour s'inscrire dans la continuité du bord inférieur du bouclier lorsque le véhicule est immobile, de manière à prolonger le galbe de celui-ci.

On peut ainsi réaliser un bouclier particulièrement esthétique.

Le bord d'attaque de la bavette est avantageusement constitué par une pièce rapportée, ce qui permet de s'adapter aisément à l'esthétique et au style des véhicules.

La bavette peut comporter une partie arrière flexible autorisant un certain débattement angulaire sous l'action des différences de pressions au-dessus et au-dessous d'elle lorsque le véhicule roule.

Un tel débattement angulaire est compris par exemple entre 5 et 10°, étant de préférence voisin de 7°.

La partie arrière précitée est avantageusement élastiquement déformable, ce qui permet de ramener la bavette dans sa position initiale lorsque le véhicule est à l'arrêt.

La bavette est avantageusement conformée en boîtier ouvert supérieurement, ce qui lui confère davantage de rigidité.

Dans un mode de réalisation particulier, la bavette est articulée autour d'un axe géométrique transversal sur le bouclier.

Dans ce mode de réalisation, il est avantageux que le bouclier comporte une contre-lame de renfort s'étendant entre sa fixation sur le châssis du véhicule et l'articulation de la bavette, de manière à répercuter sur le châssis du véhicule les efforts subis par la bavette en position basse.

Dans un autre mode de réalisation, la bavette est articulée directement sur une partie rigide du véhicule, comme par exemple le berceau moteur. La bavette est alors renforcée par exemple par des nervures et constitue un appui bas de l'avant du véhicule en cas de choc.

Un tel appui bas vient compléter le dispositif de pare-chocs pour le rendre moins agressif en cas de choc avec un piéton.

En effet, des essais sur ce type de chocs ont montré que d'importantes blessures sur les jambes des piétons peuvent être évitées en répartissant les efforts au mieux entre tibia et fémur grâce à un appui bas relativement rigide.

Dans une variante exclusivement dédiée à cet objectif de sécurité, la bavette est renforcée pour constituer un appui bas.

La bavette peut être reliée à un mécanisme de rappel lui permettant de revenir en position haute lorsque la vitesse du véhicule devient inférieure à une vitesse seuil prédéterminée.

La bavette peut également être reliée à un amortisseur qui sert notamment à définir un seuil franc entre ses positions haute et basse.

De préférence, l'amortisseur est taré pour empêcher le déplacement de la bavette tant que la pression exercée sur elle par la chambre de pression n'a pas duré au moins un temps prédéterminé.

Dans un mode de réalisation particulier, la bavette est amovible.

Ainsi, un fabriquant de tels boucliers peut proposer à sa clientèle des boucliers dépourvus de bavette pour des versions d'entrée de gamme et des boucliers équipés de bavette pour des versions de gamme supérieure.

**Dans** le but de mieux faire comprendre l'invention, on va en décrire maintenant des modes de réalisation donnés à titre d'exemples non limitatifs de la portée de l'invention, en référence au dessin annexé, dans lequel :
- la figure 1 est une vue schématique en élévation d'un véhicule équipé d'un bouclier selon l'invention,
- la figure 2 est une vue schématique de la partie avant du véhicule de la figure 1, la bavette se trouvant en position basse,
- la figure 3 est une vue de détail et en coupe de la bavette du bouclier des figures 1 et 2,
- la figure 4 est une vue analogue à la figure 3 représentant la bavette en position basse,
- la figure 5 est une vue en perspective de trois quarts arrière montrant l'intérieur du bouclier dans sa partie droite,
- la figure 6 est un double graphique représentant les changements de position (P) de la bavette en fonction de la vitesse (V) du véhicule,
- la figure 7 est une vue en section d'un pare-chocs comprenant un appui haut et un appui bas,
- la figure 8 est une vue schématique en coupe d'une bavette à partie arrière flexible,
- la figure 9 est une vue schématique et partielle, en perspective, d'une bavette à bord d'attaque rapporté, et
- la figure 10 est une vue schématique d'une bavette montée à l'arrière d'un véhicule automobile.

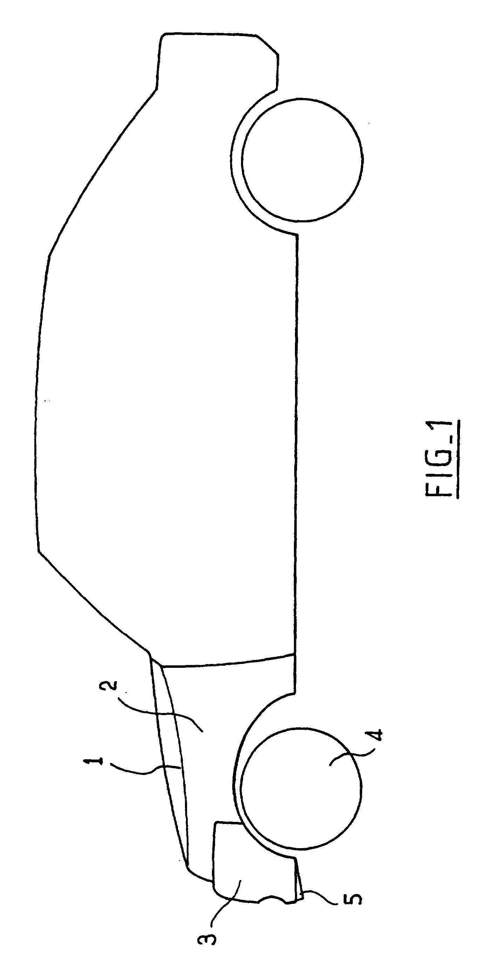

Le véhicule représenté à la figure 1 comporte une carrosserie comprenant notamment au voisinage du train avant 4, un capot 1, une aile avant 2 et un bouclier avant 3.

Le bouclier, dont seule la peau est représentée ici, dissimule dans sa partie supérieure un dispositif de pare-chocs qui ne sera pas décrit.

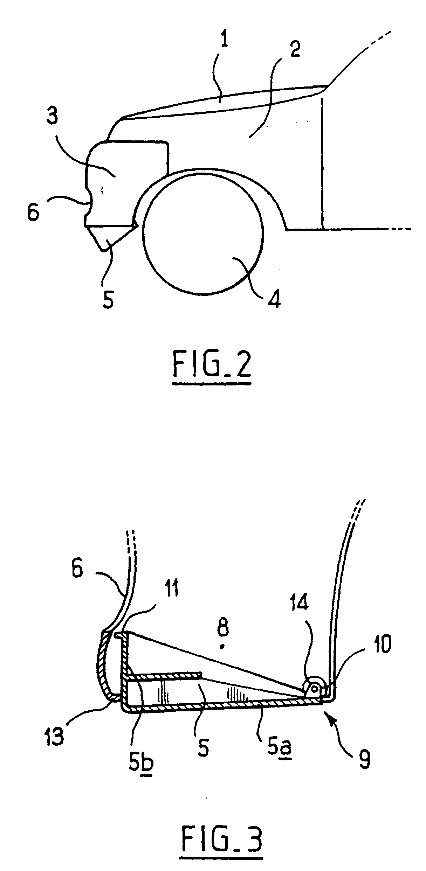

La partie inférieure du bouclier est munie d'une bavette mobile 5 qui est mieux visible sur les figures 2 à 5.

La bavette 5 est composée d'une paroi de fond 5a et d'une paroi frontale 5b de forme arrondie, dont la hauteur décroît depuis sa partie centrale en direction de ses deux extrémités latérales dirigées vers l'arrière, lesquelles se terminent sensiblement à hauteur de la paroi de fond 5a.

Cette configuration de la bavette en fait un boîtier ouvert supérieurement.

La peau du bouclier 3 comporte une ouverture 6 qui sert de prise d'air et permet l'introduction d'un flux d'air 7 derrière la peau du bouclier, au-dessus de la bavette 5 lorsque le véhicule est en mouvement.

L'intérieur du bouclier en aval de l'ouverture 6 constitue une chambre de pression 8 qui est obturée inférieurement par la bavette 5 conformée en boîtier.

La bavette est articulée dans l'exemple décrit à son extrémité arrière 9 autour d'un axe transversal 10 perpendiculaire au sens de déplacement du véhicule.

La paroi frontale 5b de la bavette comporte un rebord supérieur 11 dirigé vers l'avant.

La peau du bouclier 3 se termine à sa partie basse par un rebord 13 dirigé vers l'intérieur.

En position haute de la bavette, la paroi frontale 5b vient buter contre le rebord 13, comme on le voit à la figure 3.

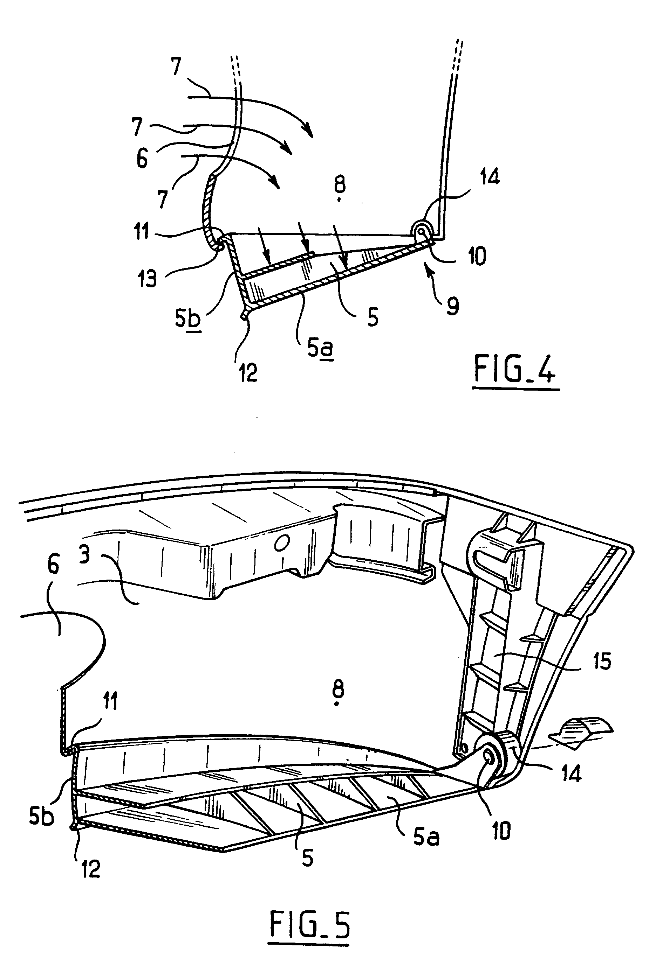

En position basse, le rebord supérieur 11 vient buter contre le rebord 13, comme représenté à la figure 4.

L'articulation 10 de la bavette est munie d'un dispositif 14 intégré au bouclier formant à la fois amortisseur et mécanisme de rappel de la bavette en position haute.

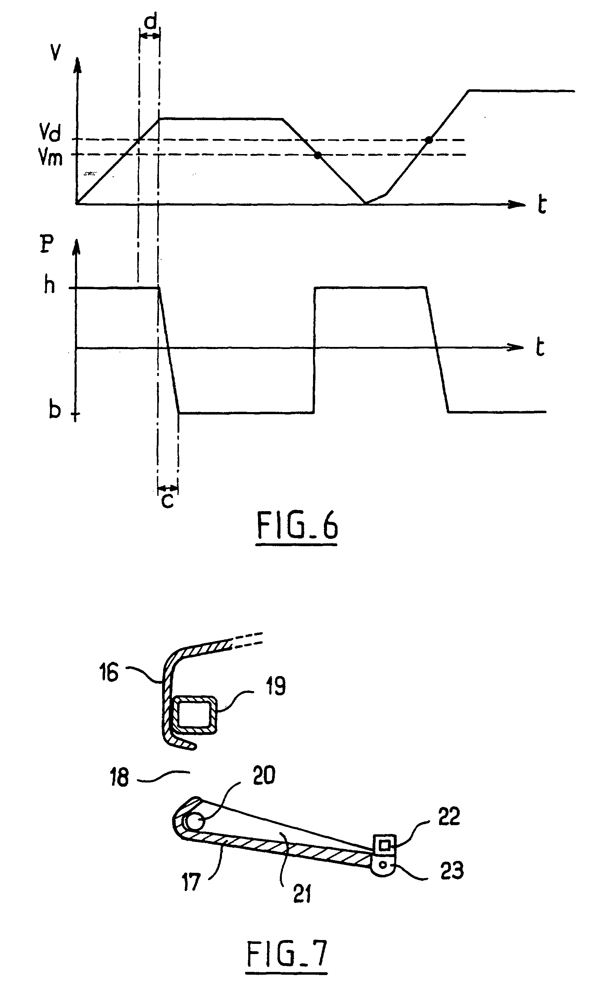

On comprend que lorsque le véhicule roule à faible vitesse, le mécanisme de rappel 14 joue son rôle en maintenant la bavette 5 en position haute (h sur la figure 6).

Lorsque le véhicule prend de la vitesse, le flux d'air 7 pénétrant dans la chambre de pression 8 par l'ouverture 6 exerce une force sur la paroi de fond 5a de la bavette.

La dépression créée sous le véhicule par la vitesse tend également à faire pivoter la bavette.

L'action combinée de la pression au-dessus de la paroi de fond 5a de la bavette et de la dépression sous celle-ci provoque la descente de la bavette en position basse (b sur la figure 6).

La descente de la bavette tend à accroître la dépression sous le véhicule.

L'amortisseur 14 est taré de manière à retarder la descente de la bavette, comme on le voit à la figure 6.

Ainsi un certain délai d est nécessaire après que la vitesse du véhicule ait dépassé une vitesse seuil de descente prédéterminée Vd pour que la bavette descende.

Le délai d est dû à la présence de l'amortisseur, qui filtre ainsi les brefs dépassements de la vitesse seuil Vd pour ne retenir que les dépassements durables, afin que la bavette n'oscille pas entre ses deux positions lorsque la vitesse du véhicule est voisine de ce seuil Vd.

A partir de cet instant, la bavette passe en position basse, position qu'elle atteint une fois la course c de l'amortisseur parcourue.

Lorsque la vitesse du véhicule redevient inférieure à la vitesse seuil de montée prédéterminée Vm, la bavette remonte en position haute grâce au mécanisme de rappel.

On remarquera que la vitesse de seuil de montée Vm est inférieure à la vitesse seuil de descente Vd, ce qui stabilise la bavette lorsque la vitesse du véhicule reste voisine de la vitesse qui a provoqué un changement de position de la bavette.

Comme on le voit à la figure 5, le bouclier comporte intérieurement une contre-lame 15 qui a pour fonction de renvoyer sur le châssis du véhicule, par l'intermédiaire de la fixation du bouclier, les efforts subis par l'articulation 10 de la bavette, afin de ne pas déformer le bouclier lorsque la bavette est en position basse.

Sur la section transversale de la figure 7, on a représenté un pare-chocs comportant une peau 16 et une bavette 17 séparés par une entrée d'air 18.

La peau 16 est renforcée par une poudre d'absorption d'énergie 19, comme cela est bien connu.

La peau 16 et la poutre 19 constituent un appui haut du pare-chocs.

La bavette 17 est renforcée par une traverse 20, qui est moins rigide que la poutre d'absorption d'énergie 19.

La bavette 17 constitue un appui bas du pare-chocs.

Cet appui bas vient compléter le pare-chocs pour répartir les efforts subis par la jambe d'un piéton en cas de choc contre l'avant du véhicule.

Pour son renfort, la bavette comporte des nervures longitudinales 21 et elle est fixée au berceau moteur 22 du moteur par l'intermédiaire d'une articulation 23.

Dans les exemples de réalisation qui viennent d'être décrits, la bavette est articulée au moyen d'un ou plusieurs axes.

On peut toutefois, sans sortir du cadre de la présente invention, réaliser à l'arrière de la bavette une partie flexible capable de se déformer pour permettre un certain débattement vertical de la partie avant de la bavette lorsque le véhicule roule.

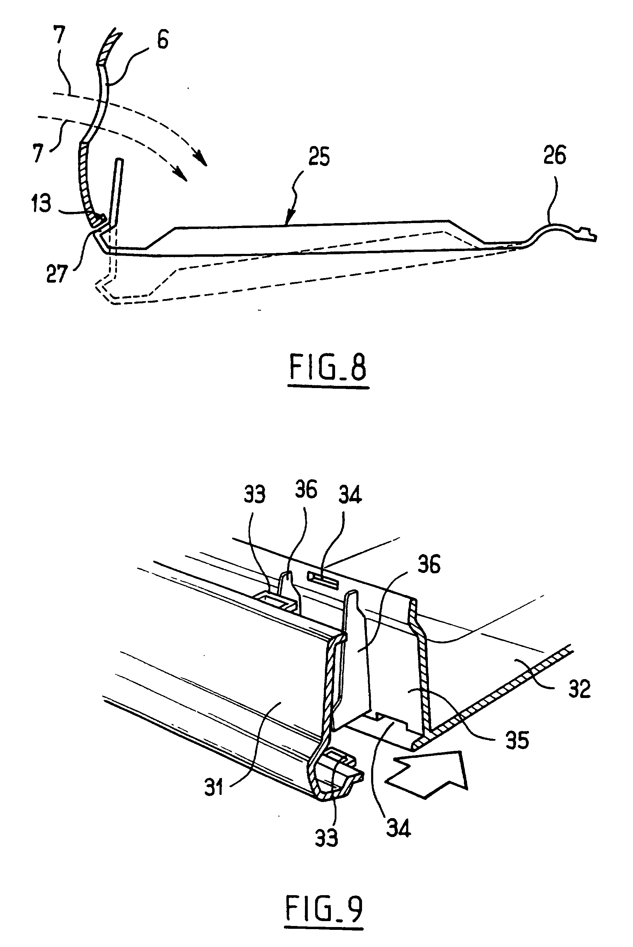

A titre d'exemple, on a représenté sur la figure 8 une bavette 25 qui comporte une partie arrière 26 flexible présentant une forme autorisant un certain débattement de la partie avant 27 de la bavette.

On a représenté sur cette figure en traits discontinus la bavette 25 après pivotement vers le bas.

Dans l'exemple décrit, le débattement angulaire est de 7° environ.

Le bord d'attaque de la bavette est avantageusement constitué par une pièce rapportée, comme illustré sur la figure 9.

Sur cette figure, on a représenté partiellement la partie avant d'une bavette comportant une paroi de fond 32 et un montant 35 pourvu d'ouvertures 34.

Le montant 35 comporte également des nervures de rigidification verticales 36.

Une pièce 31 destinée à constituer le bord d'attaque de la bavette est rapportée sur le montant 35.

Cette pièce 31 comporte, à l'arrière, des languettes 33 destinées à s'encliqueter dans les ouvertures 34 précitées.

Il est avantageux d'utiliser une pièce rapportée pour constituer le bord d'attaque de la bavette, car cela permet de s'adapter facilement aux styles des véhicules.

On voit sur la figure 8 que la partie avant 27 s'inscrit dans la continuité de la partie inférieure du bouclier lorsque le véhicule est à l'arrêt.

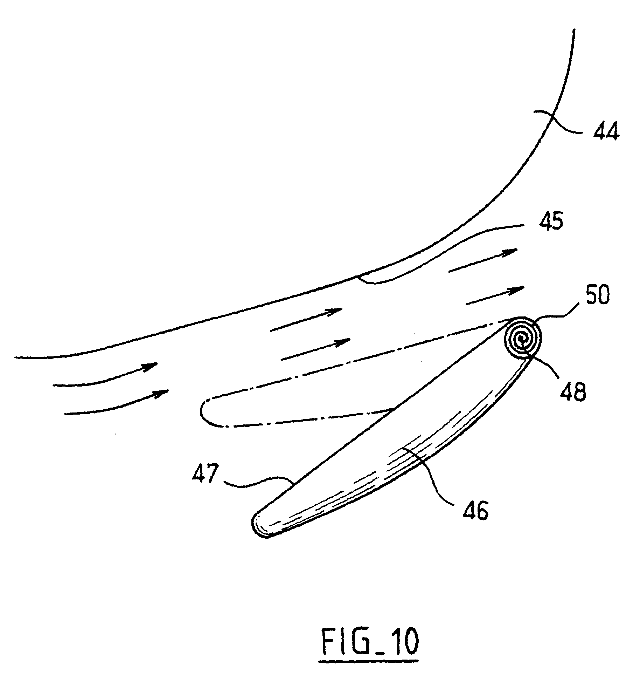

Dans le mode de réalisation de la figure 10, le bouclier arrière 44 présente une forme arrondie à sa partie basse, se prolongeant vers l'avant par une paroi inférieure 45 qui est presque horizontale.

La bavette est constituée par une pièce 46 qui s'étend sur presque toute la largeur du véhicule et comporte une face supérieure sensiblement plane 47.

La bavette 46 est montée pivotante autour d'un axe 48, ce qui lui permet de prendre une position haute dite position faible vitesse, représentée en traits interrompus sur la figure 10 et une position basse dite position vitesse élevée, représentée en traits pleins.

En position haute, la face supérieure 47 de la bavette est sensiblement parallèle à la paroi inférieure 45 du bouclier.

On voit qu'il subsiste entre la paroi 45 et la face 47 un espace permettant le passage d'un flux d'air provenant du dessous du véhicule et que ce passage présente une section transversale sensiblement constante.

En position basse, la bavette est inclinée par rapport à la paroi inférieure 45 du bouclier. Le passage pour le flux d'air provenant du dessous du véhicule présente une section transversale décroissante de l'avant vers l'arrière du véhicule. La bavette et la paroi 45 forment un venturi qui accélère l'air à la sortie du véhicule et réduit la traînée de ce dernier.

En outre, l'orientation vers le haut du flux d'air sortant réduit la portance du véhicule en jouant le rôle d'un aileron.

Le changement de position de la bavette est assuré par l'écoulement d'air. En passant sur la face supérieure 47 de la bavette, l'air exerce sur la bavette une force qui, combinée à la dépression régnant sous le véhicule et à la réaction de l'axe, forme un couple qui induit la rotation de la bavette autour de son axe.

Le retour de la bavette à sa position haute est assuré par un ressort de rappel 50 dont la raideur est réglée de manière que le changement de position de la bavette s'effectue à la vitesse de déplacement souhaitée du véhicule.

Un mécanisme de butées (non représenté) bloque la bavette en position basse. L'homme du métier saura disposer ou agencer ces butées de façon à profiter de la garde au sol élevée du véhicule lorsque la bavette se trouve en position haute.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Bouclier de véhicule automobile comportant à sa partie inférieure une bavette mobile entre une position basse et une position haute et une chambre au dessus de la bavette, **caractérisé par le fait que** la chambre est une chambre de pression permettant de créer une surpression du côté supérieur de la bavette, lorsque le véhicule roule, cette surpression tendant à faire basculer la bavette vers sa position basse.

2. Bouclier selon la revendication précédente, **caractérisé par le fait qu'**il comporte au moins une prise d'air (6) débouchant sur la chambre de pression (8).

3. Bouclier selon l'une des revendications 1 et 2, **caractérisé par le fait que** la bavette est agencée de manière à permettre la création d'une dépression du côté inférieur de celle-ci lorsque le véhicule roule, en plus de la surpression créée de son côté supérieur grâce à la chambre de pression (8).

4. Bouclier selon l'une quelconque des revendications précédentes, **caractérisé par le fait que** la bavette présente un bord d'attaque conformé pour s'inscrire dans la continuité du bord inférieur du bouclier lorsque le véhicule est immobile.

5. Bouclier selon la revendication précédente, **caractérisé par le fait que** ledit bord d'attaque est constitué par une pièce rapportée (31).

6. Bouclier selon l'une quelconque des revendications précédentes, **caractérisé par le fait que** la bavette comporte une partie arrière flexible (26) autorisant un certain débattement angulaire sous l'action des différences de pression au-dessus et au-dessous de la bavette lorsque le véhicule roule.

7. Bouclier selon la revendication précédente, **caractérisé par le fait que** ledit débattement angulaire est compris entre 5 et 10°, étant de préférence voisin de 7°.

8. Bouclier selon l'une des deux revendications précédentes, **caractérisé par le fait que** ladite partie arrière flexible (26) est élastiquement déformable.

9. Bouclier selon l'une quelconque des revendications précédentes, **caractérisé par le fait que** la bavette est conformée en boîtier ouvert supérieurement.

10. Bouclier selon l'une quelconque des revendications précédentes, **caractérisé par le fait que** le bouclier comporte une contre-lame de renfort entre sa fixation sur le châssis du véhicule et l'articulation de la bavette.

11. Bouclier selon l'une quelconque des revendications précédentes, **caractérisé par le fait que** la bavette est articulée directement sur une partie rigide du véhicule et qu'elle est renforcée pour constituer un appui bas du pare-chocs.

12. Bouclier selon la revendication 1, **caractérisé par le fait que** la bavette (46) est située à l'arrière du véhicule.

13. Bouclier selon l'une quelconque des revendications précédentes, **caractérisé par le fait que** la bavette est reliée à un mécanisme de rappel lui permettant de revenir en position haute lorsque la vitesse du véhicule devient inférieure à une vitesse seuil prédéterminée.

14. Bouclier selon l'une quelconque des revendications précédentes, **caractérisé par le fait que** la bavette est reliée à un amortisseur qui est taré pour empêcher le déplacement de la bavette tant que la pression exercée sur elle n'a pas duré au moins un temps prédéterminé.

15. Bouclier selon l'une quelconque des revendications précédentes, **caractérisé par le fait que** la bavette est fixée de manière amovible sur le bouclier.

## Patentansprüche

1. Kraftfahrzeugschild, der an seinem unteren Teil eine zwischen einer unteren und einer oberen Position bewegliche Schürze sowie eine Kammer oberhalb der Schürze aufweist, **dadurch gekennzeichnet, dass** die Kammer eine Druckkammer ist, die es ermöglicht, bei fahrendem Fahrzeug auf der Oberseite der Schürze einen Überdruck zu erzeugen, wobei dieser Überdruck bestrebt ist, die Schürze in die untere Position zu schwenken.

2. Schild nach dem vorhergehenden Anspruch, **dadurch gekennzeichnet, dass** er wenigstens ein in die Druckkammer (8) mündendes Luftloch (6) aufweist.

3. Schild nach einem der Ansprüche 1 und 2, **dadurch gekennzeichnet, dass** die Schürze derart angeordnet ist, dass sie bei fahrendem Fahrzeug - zusätzlich zu dem mittels der Druckkammer (8) auf ihrer Oberseite erzeugten Überdruck - die Erzeugung eines Unterdruckes auf ihrer Unterseite ermöglicht.

4. Schild nach irgendeinem der vorhergehenden Ansprüche, **dadurch gekennzeichnet, dass** die Schürze eine Vorderkante aufweist, welche ausgebildet ist, um sich bei stehendem Fahrzeug mit dem unteren Rand des Schildes fortzusetzen.

5. Schild nach dem vorhergehenden Anspruch, **dadurch gekennzeichnet, dass** die genannte Vorderkante von einem Ansatzstück (31) gebildet ist.

6. Schild nach irgendeinem der vorhergehenden Ansprüche, **dadurch gekennzeichnet, dass** die Schürze ein flexibles hinteres Teil (26) aufweist, das bei fahrendem Fahrzeug einen gewissen Winkelausschlag unter der Wirkung der Druckunterschiede ober- und unterhalb der Schürze zulässt.

7. Schild nach dem vorhergehenden Anspruch, **dadurch gekennzeichnet, dass** der genannte Winkelausschlag zwischen 5 und 10° liegt, wobei er vorzugsweise nahe 7° liegt.

8. Schild nach einem der beiden vorhergehenden Ansprüche, **dadurch gekennzeichnet, dass** das genannte flexible hintere Teil (26) elastisch verformbar ist.

9. Schild nach irgendeinem der vorhergehenden Ansprüche, **dadurch gekennzeichnet, dass** die Schürze als oben offenes Gehäuse gestaltet ist.

10. Schild nach irgendeinem der vorhergehenden Ansprüche, **dadurch gekennzeichnet, dass** der Schild ein Verstärkungsgegenblech zwischen seiner Befestigung am Chassis des Fahrzeugs und der Anlenkung der Schürze aufweist.

11. Schild nach irgendeinem der vorhergehenden Ansprüche, **dadurch gekennzeichnet, dass** die Schürze direkt an einem steifen Teil des Fahrzeugs angelenkt ist und dass sie verstärkt ist, um eine untere Stütze des Stoßfängers zu bilden.

12. Schild nach Anspruch 1, **dadurch gekennzeichnet, dass** sich die Schürze (46) am hinteren Teil des Fahrzeugs befindet.

13. Schild nach irgendeinem der vorhergehenden Ansprüche, **dadurch gekennzeichnet, dass** die Schürze mit einem Rückstellmechanismus verbunden ist, der es ihr ermöglicht, in die obere Position zurückzukehren, wenn die Geschwindigkeit des Fahrzeugs geringer wird als eine vorbestimmte Schwellengeschwindigkeit.

14. Schild nach irgendeinem der vorhergehenden Ansprüche, **dadurch gekennzeichnet, dass** die Schürze mit einem Dämpfer verbunden ist, welcher eingestellt ist, um die Bewegung der Schürze zu verhindern, solange der auf sie ausgeübte Druck nicht wenigstens eine vorbestimmte Zeit angedauert hat.

15. Schild nach irgendeinem der vorhergehenden Ansprüche, **dadurch gekennzeichnet, dass** die Schürze lösbar an dem Schild befestigt ist.

## Claims

1. Motor vehicle apron comprising, at its lower part, a spoiler that can move between a lowered position and a raised position, and a chamber above the spoiler, **characterized in that** the chamber is a pressure chamber making it possible to create a raised pressure on the top side of the spoiler when the vehicle is driving along, this raised pressure tending to pivot the spoiler into its lowered position.

2. Apron according to the preceding claim, **characterized in that** it comprises at least one air intake (6) opening into the pressure chamber (8).

3. Apron according to the one of claims 1 and 2, **characterized in that** the spoiler is arranged in such a way as to allow a depression to be created on the bottom side thereof when the vehicle is driving along, in addition to the raised pressure created on its top side by virtue of the pressure chamber (8).

4. Apron according to any one of the preceding claims, **characterized in that** the spoiler has a leading edge shaped to lie in the continuation of the lower edge of the apron when the vehicle is stationary.

5. Apron according to the preceding claim, **characterized in that** the said leading edge consists of an attached part (31).

6. Apron according to the any one of the preceding claims, **characterized in that** the spoiler comprises a flexible rear part (26) allowing a certain angular deflection under the action of the pressure differences above and below the spoiler when the vehicle is driving along.

7. Apron according to the preceding claim, **characterized in that** the said angular deflection is between 5 and 10°, preferably being close to 7°.

8. Apron according to one of the two preceding claims, **characterized in that** the said flexible rear part (26) is elastically deformable.

9. Apron according to any one of the preceding claims, **characterized in that** the spoiler is shaped as a box open at the top.

10. Apron according to any one of the preceding claims, **characterized in that** the apron comprises a reinforcing backing strip between its fixing to the chassis of the vehicle and the articulation of the spoiler.

11. Apron according to any one of the preceding claims, **characterized in that** the spoiler is articulated directly to a rigid part of the vehicle and strengthened to form a bottom support for the bumper.

12. Apron according to Claim 1, **characterized in that** the spoiler (46) is situated at the rear of the vehicle.

13. Apron according to any one of the preceding claims, **characterized in that** the spoiler is connected to a return mechanism that allows it to return to a raised position when the speed of the vehicle drops below a predetermined threshold speed.

14. Apron according to the any one of the preceding claims, **characterized in** the spoiler is connected to a damper rated to prevent the spoiler from moving as long as the pressure exerted on it has not lasted for at least a predetermined length of time.

15. Apron according to any one of the preceding claims, **characterized in that** the spoiler is fixed removably to the apron.
